(19) Europäisches Patentamt / European Patent Office / Office européen des brevets

(11) **EP 3 081 902 B1**

(12) **EUROPEAN PATENT SPECIFICATION**

(45) Date of publication and mention
of the grant of the patent:
**17.04.2019 Bulletin 2019/16**

(51) Int Cl.:
***G01C 21/16*** *(2006.01)*       ***G01C 21/20*** *(2006.01)*
***B64C 39/02*** *(2006.01)*       ***B64D 47/08*** *(2006.01)*
***G05D 1/10*** *(2006.01)*

(21) Application number: **14887387.0**

(22) Date of filing: **24.03.2014**

(86) International application number:
**PCT/CN2014/073985**

(87) International publication number:
**WO 2015/143615 (01.10.2015 Gazette 2015/39)**

(54) **METHOD AND APPARATUS FOR CORRECTING AIRCRAFT STATE IN REAL TIME**

VERFAHREN UND VORRICHTUNG ZUR KORREKTUR DES FLUGZEUGSTATUS IN ECHTZEIT

PROCÉDÉ ET APPAREIL DE CORRECTION DE L'ÉTAT D'UN AÉRONEF EN TEMPS RÉEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.10.2016 Bulletin 2016/42**

(73) Proprietor: **SZ DJI Technology Co., Ltd.
Shenzhen, Guangdong 518057 (CN)**

(72) Inventors:
• **ZHOU, Guyue
Shenzhen
Guangdong 518057 (CN)**
• **YANG, Shuo
Shenzhen
Guangdong 518057 (CN)**

• **LIU, Ang
Shenzhen
Guangdong 518057 (CN)**

(74) Representative: **Goddar, Heinz J.
Boehmert & Boehmert
Anwaltspartnerschaft mbB
Pettenkoferstrasse 22
80336 München (DE)**

(56) References cited:
**WO-A1-2005/119178       CN-A- 101 598 556
CN-A- 103 365 297       CN-A- 103 914 065
US-A1- 2013 046 459**

## Description

### Field of the Invention

The present invention relates to the field of controlling an unmanned aircraft, and particularly to a method for modifying an aircraft state in real time as well as an apparatus for modifying an aircraft state in real time.

### Background of the Invention

In recent years, unmanned aircraft (e.g., fixed-wing aircraft, rotary-wing aircraft including helicopter) carrying a camera plays a very important role in application fields such as monitoring, surveillance and search and rescue. Control of these aircraft is usually performed by a user via a remote controller.

During the operator's remote control of the aircraft, since his sight distance is limited, it is very difficult for the operator to observe the state of the aircraft in the case that the aircraft flies far away or the operator's vision is hindered. If there's no auxiliary flying means for the aircraft, the aircraft is very likely to be lost or collide with an obstacle. Therefore, aircraft having an auxiliary flying means comes into being. Existing aircraft performs visual navigation by virtue of camera so as to estimate its own state information. However, a deviation occurs between the estimated state information and the actual state information. The longer the duration of the visual navigation is, the larger the deviation diverges, so that the reliability of the visual navigation is reduced.

WO 2005/119178 A1 describes an image-augmented inertial navigation system (LAWS) mounted on a vehicle includes an inertial navigation system configured to estimate a navigation state vector and an imager configured to output pixel signals associated with terrain features passing through a field of view of the imager. The system further includes a processing unit operatively connected to the inertial navigation system and the imager. The processing unit is configured to sense a distance from the imager to a centroid of one or more of the terrain features passing though a field of view of the imager for a given image frame associated with the feature pixel signals. The processing unit is also configured to track each terrain feature as the terrain features pass through the field of view of the imager. The processing unit is further configured to update the navigation state vector of the inertial navigation system based on calculated coordinates position information of the inertial navigation system relative to the tracked terrain features.

### Summary of the Invention

A main object of the present invention is to provide a method and apparatus for modifying an aircraft state in real time, which can modify state information of the aircraft and reduce a deviation.

To solve the above technical problem, the present invention employs a technical solution of providing: a method for modifying an aircraft state in real according to claim 1.

Wherein the step of modifying current state information of the image capturing unit estimated from the historical state information, by using the relative proportional relationship comprises: filtering the historical state information according to a pre-established state model and a pre-established measuring model by using a Kalman filter, to obtain the current state information of the image capturing unit; subjecting the relative proportional relationship and the current state information to a product operation.

Wherein, the image capturing unit comprises a monocular camera.

Wherein, the monocular camera is a panoramic camera, and the image capturing unit further comprises a reflection mirror for reflecting external light rays to the monocular camera; the method further comprises, after the step of obtaining the current image shot by the image capturing unit: obtaining a coordinate mapping relationship between arbitrary point in an external space and a corresponding point in the current image shot by the image capturing unit according to a pre-established calibration model corresponding to the reflection mirror, and calibrating the current image shot by the image capturing unit by using the coordinate mapping relationship.

Wherein, wherein the state information comprises posture, position, speed, direction and surrounding environmental information of the image capturing unit.

To solve the above technical problem, the present invention employs another technical solution of providing: apparatus for modifying an aircraft state in real time, according to claim 7.

Wherein, the modifying module comprises a filter unit and a modifying unit, wherein, the filter unit filters the historical state information according to a pre-established state model and a pre-established measuring model by using a Kalman filter, to obtain the current state information of the image capturing unit; the modifying unit subjects the relative proportional relationship and the current state information to a product operation.

Wherein, the image capturing unit comprises a monocular camera. wherein, the monocular camera is a panoramic camera, and the image capturing unit further comprises a reflection mirror for reflecting external light rays to the monocular camera, the apparatus further comprises a calibrating module which, after the obtaining module obtains the current image shot by the image capturing unit, obtains a coordinate mapping relationship between arbitrary point in an external space and a corresponding point in the current image shot by the image capturing unit according to a pre-established calibration model corresponding to the reflection mirror, and calibrating the current image shot by the image capturing unit by using the coordinate mapping relationship.

Wherein, the state information comprises posture, position, speed, direction and surrounding environmental information of the image capturing unit.

Advantageous effects of the present invention are as follows: different from situations in the prior art, the method and apparatus for modifying an aircraft state in real time according to the present invention calculate external information or internal information of the image capturing unit through the historical state information and the characteristic points in the historical image and the current image shot by the image capturing unit, then combine it with external information or internal information of at least one kind of sensor to obtain a relative proportional relationship between the two external information or internal information, use the relative proportional relationship to modify the current state information obtained on the basis of the historical state information, so as to modify the state information of the aircraft, reduce a deviation of the state information and improve an accuracy and reliability.

**Brief Description of Drawings**

Fig.1 is a flow diagram of a method of modifying an aircraft state in real time according to an embodiment of the present invention;

Fig.2 is a schematic view showing a comparison of an image before correction and an image after correction by the method of modifying an aircraft state in real time according to the present invention;

Fig.3 is a flow chart of the method of modifying an aircraft state in real time shown in Fig.1 in a specific application scenario;

Fig.4 is a schematic diagram of the structure of an apparatus of modifying an aircraft state in real time according to an embodiment of the present invention.

**Detailed Description of Preferred Embodiments**

Technical solutions in the embodiments of the present invention will be clearly and completely described below with reference to figures in the embodiments of the present invention. Obviously, the described embodiments are only a portion rather than all of the embodiments of the present invention. All other embodiments obtained by those having ordinary skill in the art based on the embodiments in the present invention without making inventive efforts all fall within the protection scope of the present invention.

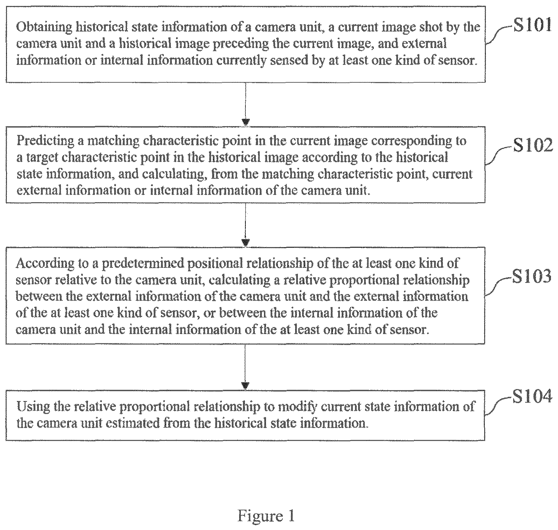

Fig.1 is a flow diagram of a method of modifying an aircraft state in real time according to an embodiment of the present invention, the method comprises:

S101: obtaining historical state information of an image capturing unit, a current image shot by the image capturing unit and an historical image preceding the current image, and currently-measured external information or internal information sensed by at least one kind of sensor.

Wherein an amount of the state information at the moment of aircraft taking off is 0, and the state information in each unit time after taking off is related to the state information in the previous unit time. Since the image capturing unit is fixed on the aircraft, the state information of the aircraft may be considered as the state information of the image capturing unit. In the present embodiment, the state information at least comprises the posture, position, speed, direction, and surrounding environmental information of the image capturing unit. In the present embodiment, the image capturing unit comprises a monocular camera.

If an interval between unit time is relatively large, the historical state information may preferably be the state information at the previous unit time, and the historical image may preferably be the image at the previous unit time. If an interval between unit time is relatively short, the historical state information may be the state information at a past unit time separated by a plurality of unit time, and the historical image may be the image at a past unit time separated by a plurality of unit time.

In the present embodiment, the external information comprises distance information relative to an external object, and the internal information includes at least one of acceleration information, direction information, angular speed information, speed information or mileage information. In specific embodiments, an external sensor such as a laser sensor or an ultrasonic sensor may be employed to measure the distance relative to the external object, and an internal sensor such as an acceleration sensor, direction sensor or a mileage sensor may be employed to measure internal information such as acceleration, direction or mileage.

S102: predicting a matching characteristic point in the current image corresponding to a target characteristic point in the historical image according to the historical state information, and calculating, based on the matching characteristic point, current external information or internal information of the image capturing unit.

Particularly, the image shot by the image capturing unit includes information of many objects such as trees and buildings, and any edge corner point of these objects may be treated as a target characteristic point. Since the historical state information includes information characterizing a motion vector such as direction and speed, after the target characteristic point in the historical image is selected, the matching characteristic point in the current image, which corresponds to the target characteristic point in the historical image, may be deduced according to the direction and speed in the historical state information.

The external information or internal information of the image capturing unit and the external information or internal information measured by the sensor are different measurement results. The external information or internal information of the image capturing unit may be calculated from the matching characteristic point, for example, when calculating the distance information relative to the external object, a distance from the image capturing unit to the matching characteristic point is calculated through the coordinate value of the current characteristic point; when calculating the speed information, the speed of the image capturing unit is calculated according to the coordinate value of the current characteristic point, the coordinate value of the target characteristic point and the interval of unit time.

As a preferred solution of the present embodiment, the step of predicting a matching characteristic point in the current image corresponding to a target characteristic point in the historical image according to the historical state information comprises: predicting a coordinate position in the current image of the target characteristic point in the historical image according to the historical state information; selecting a characteristic point nearest to the coordinate position as the matching characteristic point in the current image corresponding to the target characteristic point in the historical image.

Wherein, a displacement of the coordinate position of the target characteristic point may be obtained through the historical state information so as to determine the coordinate position of the target characteristic point in the current image. The process may employ an optical flow method, or a matching method based on feature descriptors, etc. Of course, the state information of the aircraft may vary, and the coordinate position of the target characteristic point may not have a coordinate point in the current image, thus a characteristic point nearest to the coordinate position may be searched as the matching characteristic point.

S103: according to a predetermined positional relationship of the at least one kind of sensor relative to the image capturing unit, calculating a relative proportional relationship between the external information of the image capturing unit and the external information of the at least one kind of sensor, or between the internal information of the image capturing unit and the internal information of the at least one kind of sensor.

Wherein, the positional relationship between the sensor and image capturing unit on the aircraft is obtained though pre-determination and is a known quantity. The positional relationship includes the distance between the sensor and the image capturing unit. The relative proportional relationship between the two external information or between two internal information may be obtained according to the positional relationship, the external information or internal information of the sensor, and the external information or internal information of the image capturing unit.

S104: modifying current state information of the image capturing unit estimated from the historical state information, by using the relative proportional relationship.

As a preferred solution of the present embodiment, step S104 specifically comprises: using a Kalman filter to filter the historical state information according to a pre-established state model and a measuring model to obtain the current state information of the image capturing unit; subjecting the relative proportional relationship and the current state information to a product operation.

Wherein, both the state model and the measuring model are pre-established and are known. The current state information obtained by using the Kalman filter is in proportional relationship with the actual state information, and subjecting the relative proportional relationship and the current state information to a product operation may allow the current state information further approach to the actual state information, or even equal to the actual state information, such that the purpose of modification can be achieved.

Please note that, in addition to the Kalman filter, the present embodiment may employ other filters such as an EKF (Extended Kalman Filter).

In further embodiments, in consideration of the shooting range of the image capturing unit, the monocular camera employs a panoramic camera, and the image capturing unit further comprises a reflection mirror for reflecting external light rays to the monocular camera. The method further comprises, after the step of obtaining the current image shot by the image capturing unit: obtaining a coordinate mapping relationship between arbitrary point in an external space and a corresponding point in the current image shot by the image capturing unit, according to a pre-established calibration model corresponding to the reflection mirror; and calibrating the current image shot by the image capturing unit by using the coordinate mapping.

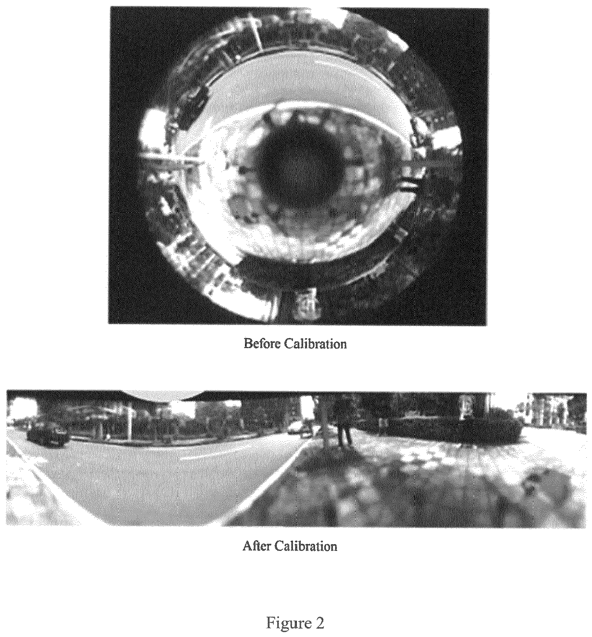

Wherein, a curved surface of the reflection mirror is typically a parabola or a hyperbola. Taking a parabola as an example, the imaging point of the monocular camera is located on the directrix of the parabola, and a line connecting the focal point of the parabola and the imaging point is perpendicular to the directrix. Since a distance from arbitrary point on the parabola to the directrix is equal to a distance to the focal point, a calibration model may be built according to this property, therefore a coordinate mapping relationship between arbitrary point in an external space and a corresponding point in the current image shot by the image capturing unit may be obtained according to the calibration model, and the coordinate mapping relationship is used to calibrate when the current image of the monocular camera is expanded. As shown in Fig.2, although the current image before calibration is severely affected by the reflection mirror, a correct image may be obtained through column-expansion calibration.

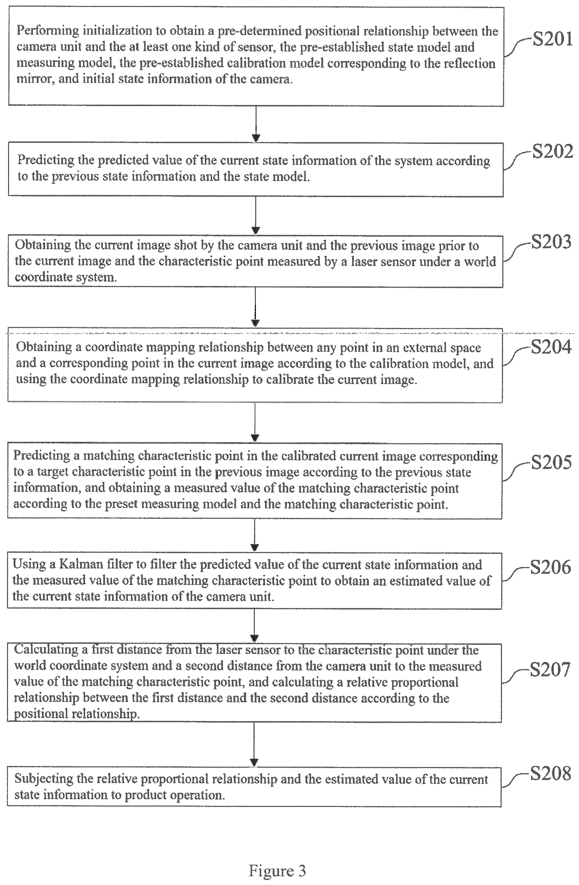

Fig.3 is a flow diagram of the method of modifying an aircraft state in real time shown in Fig.1 in a specific application scenario. In the present embodiment, the image capturing unit comprises a reflection mirror and a monocular camera, and the sensor employs a laser sensor. The method comprises:

S201: performing initialization to obtain a pre-determined positional relationship between the image capturing unit and the at least one kind of sensor, the pre-established state model and measuring model, the pre-established calibration model corresponding to the reflection mirror, and initial state information of the camera.

Wherein, an equation of the state model is as follows:

$$x\left(k\,|\,k\text{-}1\right)=Ax\left(k\text{-}1\,|\,k\text{-}1\right)+BU\left(k\right)+w\left(k\right)$$

Wherein, k is a time coefficient, x(k|k-1) is a predicted value of the current state information, x(k-1|k-1) is an estimated value of the previous state information, U(k) is a known input quantity, w is process noise, and both A and B are state parameters.

An equation of the measuring model is as follows:

$$Z\left(k\right)=Hx\left(k\,|\,k\text{-}1\right)+v\left(k\right)$$

Wherein, Z(k) is a measurement value of the matching characteristic point, v is process noise, and H is a measurement parameter.

S202: predicting the predicted value of the current state information of the system according to the previous state information and the state model.

S203: obtaining the current image shot by the image capturing unit and the previous image preceding the current image, and the characteristic point measured by a laser sensor under a world coordinate system.

S204: obtaining a coordinate mapping relationship between arbitrary point in an external space and a corresponding point in the current image according to the calibration model, and calibrating the current image by using the coordinate mapping relationship.

S205: predicting a matching characteristic point in the calibrated current image, which corresponds to a target characteristic point in the previous image, according to the previous state information, and obtaining a measured value of the matching characteristic point according to the preset measuring model and the matching characteristic point.

Wherein, in the equation of the measuring model, x(k|k-1) is the target characteristic point, and is one parameter in the predicted value of the current state information.

S206: filtering the predicted value of the current state information and the measured value of the matching characteristic point by using a Kalman filter, to obtain an estimated value of the current state information of the image capturing unit.

Wherein, a time updating equation of the Kalman filter is as follows:

$$x\left(k\,|\,k\right)=x\left(k\,|\,k\text{-}1\right)+kg(k)(Z(k)\text{-}Hx(k\,|\,k\text{-}1))$$

$$kg(k)=P\left(k\,|\,k\text{-}1\right)H^{'}/(HP(k\,|\,k\text{-}1))H'+R)$$

Wherein, x(k|k) is an estimated value of the current state information, kg(k) is a Kalman gain, P(k|k-1) is a covariance corresponding to x(k|k-1), R is a covariance of v, and H' is a transposed matrix of H.

S207: calculating a first distance from the laser sensor to the characteristic point under the world coordinate system and a second distance from the image capturing unit to the measured value of the matching characteristic point, and calculating a relative proportional relationship between the first distance and the second distance according to the positional relationship.

Wherein, if there is no characteristic point on the laser beam emitted by the laser sensor, a characteristic point nearest to the laser beam is selected.

S208: subjecting the relative proportional relationship and the estimated value of the current state information to product operation.

Wherein, after the product operation is performed, the current state information and external information, e.g., external identification point cloud may be used to build a local map, and a spatial position of an obstacle may be identified by the local map such that the aircraft may perform obstacle avoidance and navigation while it is out of the vision field of the operator.

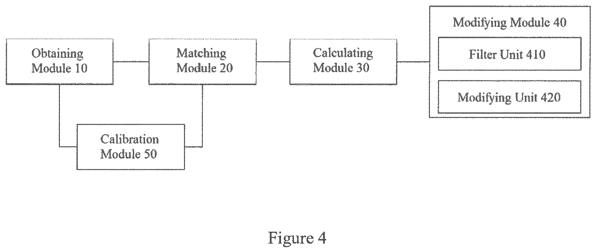

Fig.4 is a schematic diagram of the structure of an apparatus of modifying an aircraft state in real time according to an embodiment of the present invention. The aircraft comprises an image capturing unit and at least one sensor. The apparatus comprises an obtaining module 10, a matching module 20, a calculating module 30 and a modifying module 40.

The obtaining module 10 is configured to obtain historical state information of the image capturing unit, a current image shot by the image capturing unit and a historical image preceding the current image, and currently-measured external information or internal information sensed by at least one kind of sensor.

Wherein an amount of the state information at the moment of aircraft taking off is 0, and the state information in each unit time after taking off is related to the state information in the previous unit time. Since the image capturing unit is fixed on the aircraft, the state information of the aircraft may be considered as the state information of the image capturing unit. In the present embodiment, the state information at least comprises the posture, position, speed, direction and surrounding environmental information of the image capturing unit. In the present embodiment, the image capturing unit comprises a monocular camera.

If an interval between unit time is relatively large, the historical state information may preferably be the state information at the previous unit time, and the historical image may preferably be the image at the previous unit time. If an interval between unit time is relatively short, the historical state information may be the state information at a past unit time separated by a plurality of unit time, and the historical image may be the image at a past unit time separated by a plurality of unit time.

In the present embodiment, the external information comprises distance information relative to an external object, and the internal information includes at least one of acceleration information, direction information, angular speed information, speed information or mileage information. In specific embodiments, an external sensor such as a laser sensor or an ultrasonic sensor may be employed to measure the distance relative to the external object, and an internal sensor such as an acceleration sensor, direction sensor or a mileage sensor may be employed to measure internal information such as acceleration, direction or mileage.

The matching module 20 is configured to predict a matching characteristic point in the current image corresponding to a target characteristic point in the historical image according to the historical state information, and calculate, based on the matching characteristic point, current external information or internal information of the image capturing unit.

Wherein, particularly, the image shot by the image capturing unit includes information of many objects such as trees and buildings, and any edge corner point of these objects may be used as a target characteristic point. Since the historical state information includes information characterizing a motion vector such as direction and speed, after the target characteristic point in the historical image is selected, the matching characteristic point in the current image, which corresponds to the target characteristic point in the historical image may be deduced according to the direction and speed in the historical state information.

The external information or internal information of the image capturing unit and the external information or internal information measured by the sensor are different measurement results. The external information or internal information of the image capturing unit is calculated from the matching characteristic point, for example, when calculating the distance information relative to the external object, a distance from the image capturing unit to the matching characteristic point is calculated through the coordinate value of the current characteristic point; when calculating the speed information, the speed of the image capturing unit is calculated according to the coordinate value of the current characteristic point, the coordinate value of the target characteristic point and the interval of unit time.

The module 20 is specifically configured to predict a coordinate position in the current image of the target characteristic point in the historical image according to the historical state information; select a characteristic point nearest to the coordinate position as the matching characteristic point in the current image corresponding to the target characteristic point in the historical image.

Wherein, a displacement of the coordinate position of the target characteristic point is obtained through the historical state information so as to determine the coordinate position of the target characteristic point in the current image. The process may employ an optical flow method, or a matching method based on feature descriptors, etc. Of course, the state information of the aircraft may vary, and the coordinate position of the target characteristic point may not have a coordinate point in the current image, thus a characteristic point nearest to the coordinate position may be searched as the matching characteristic point.

The calculating module 30 is configured to, according to a predetermined positional relationship of the at least one kind of sensor relative to the image capturing unit, calculate a relative proportional relationship between the external information of the image capturing unit and the external information of the at least one kind of sensor, or between the internal information of the image capturing unit and the internal information of the at least one kind of sensor.

Wherein, the positional relationship between the sensor and image capturing unit on the aircraft is obtained though pre-determination and is a known quantity. The positional relationship includes the distance between the sensor and the image capturing unit. The relative proportional relationship between the two external information or between two internal information is obtained according to the positional relationship, the external information or internal information of the sensor, and the external information or internal information of the image capturing unit.

The modifying module 40 is configured to modify current state information of the image capturing unit estimated from the historical state information by using the relative proportional relationship.

Wherein, as a preferred solution of the present embodiment, the modifying module 40 comprises a filter unit 410 and a modifying unit 420. The filter unit 410 is configured to use a Kalman filter to filter the historical state information according to a pre-established state model and a measuring model to obtain the current state information of the image capturing unit. The modifying unit 420 is configured to subject the relative proportional relationship and the current state information to a product operation.

Wherein, both the state model and the measuring model are pre-established and are known. The current state information obtained by using the Kalman filter is in proportional relationship with the actual state information, and subjecting the relative proportional relationship and the current state information to a product operation may allow the current state information to further approach the actual state information, and even equal to the actual state information, such that the purpose of modification can be achieved.

Please note that, in addition to the Kalman filter, the present embodiment may employ other filters such as an EKF.

In further embodiments, in consideration of the shooting range of the image capturing unit, the monocular camera employs a panoramic camera, and the image capturing unit further comprises a reflection mirror for reflecting external light rays to the monocular camera. The apparatus may further comprise a calibration module 50 which is configured to, after the obtaining module 10 obtains the current image shot by the image capturing unit: obtain a coordinate mapping relationship between arbitrary point in an external space and a corresponding point in the current image shot by the image capturing unit, according to a pre-established calibration model corresponding to the reflection mirror; and calibrate the current image shot by the image capturing unit by using the coordinate mapping.

Wherein, a curved surface of the reflection mirror is typically a parabola or a hyperbola. Taking a parabola as an example, the imaging point of the monocular camera is located on the directrix of the parabola, and a connecting line from the focal point of the parabola and the imaging point is perpendicular to the directrix. Since a distance from arbitrary point on the parabola to the directrix is equal to a distance to the focal point, a calibration model may be built according to this property, thereby a coordinate mapping relationship between arbitrary point in an external space and a corresponding point in the current image shot by the image capturing unit may be obtained according to the calibration model, and the coordinate mapping relationship is used to calibrate when the current image of the monocular camera is expanded.

An embodiment of the present invention further provides an aircraft, comprising the apparatus according to the above embodiment. Other structures of the aircraft may be referred to the prior art and are not described here.

Through the above embodiments, the method and apparatus for modifying an aircraft state in real time according to the present invention calculate external information or internal information of the image capturing unit through the historical state information and the characteristic points in the historical image and the current image shot by the image capturing unit, then combine it with external information or internal information of at least one kind of sensor to obtain a relative proportional relationship between the two external information or between two internal information, modify the current state information obtained on the basis of the historical state information by using the relative proportional relationship, so as to modify the state information of the aircraft, reduce a deviation of the state information, improve an accuracy and reliability, avoid loss of the aircraft, and enrich the flight experience of the operator.

**Claims**

1. A method for modifying an aircraft state in real time, wherein the aircraft comprises an image capturing unit and at least one kind of sensor, wherein the image capturing unit is fixed on the aircraft, and wherein the method comprises the following steps:

obtaining historical state information of the image capturing unit, a current image shot by the image capturing unit and an historical image preceding the current image, and currently-measured external information or internal information sensed by the at least one kind of sensor;

predicting a matching characteristic point in the current image corresponding to a target characteristic point in the historical image according to the historical state information, wherein the historical state information comprises information characterizing a motion vector comprising direction and speed, and wherein the step of predicting a matching characteristic point in the current image corresponding to a target characteristic point in the historical image according to the historical state information comprises:

predicting a coordinate position of the target characteristic point of the historical image in the current image according to the historical state information, and

selecting a characteristic point nearest to the coordinate position as said matching characteristic point in the current image corresponding to the target characteristic point in the historical image; and

calculating, based on the matching characteristic point, the current external information or the internal information of the image capturing unit;

calculating a relative proportional relationship between the external information of the image capturing unit and the external information of said at least one kind of sensor, or between the internal information of the image capturing unit and the internal information of said at least one kind of sensor, according to a predetermined positional relationship of said at least one kind of sensor relative to the image capturing unit, wherein external information comprises information about a distance to an external object and internal information comprises one or more of acceleration information, direction information, angular speed information, speed information or mileage information; and

modifying current state information of the image capturing unit estimated from the historical state information, by using the relative proportional relationship.

2. The method according to claim 1, wherein the step of modifying current state information of the image capturing unit estimated from the historical state information, by using the relative proportional relationship comprises:

filtering the historical state information according to a pre-established state model and a pre-established measuring model by using a Kalman filter, to obtain the current state information of the image capturing unit;

subjecting the relative proportional relationship and the current state information to a product operation.

3. The method according to claim 1, wherein the predetermined positional relationship includes a distance between the at least one kind of sensor and the image capturing unit.

4. The method according to claim 1, wherein the image capturing unit comprises a monocular camera.

5. The method according to claim 4, wherein the monocular camera is a panoramic camera, and the image capturing unit further comprises a reflection mirror for reflecting external light rays to the monocular camera; the method further comprises, after the step of obtaining the current image shot by the image capturing unit:

obtaining a coordinate mapping relationship between arbitrary point in an external space and a corresponding point in the current image shot by the image capturing unit, according to a pre-established calibration model corresponding to the reflection mirror; and calibrating the current image shot by the image capturing unit by using the coordinate mapping relationship.

6. The method according to claim 1, wherein the state information comprises posture, position, speed, direction and surrounding environmental information of the image capturing unit.

7. An apparatus for modifying an aircraft state in real time, wherein the aircraft comprises an image capturing unit fixed on the aircraft and at least one kind of sensor, the apparatus comprises:

an obtaining module for obtaining historical state information of a image capturing unit, a current image shot by the image capturing unit and an historical image preceding the current image, and currently-measured external information or internal information sensed by the at least one kind of sensor;

a matching module for predicting a matching characteristic point in the current image corresponding to a target characteristic point in the historical image according to the historical state information, wherein the historical state information comprises information characterizing a motion vector comprising direction and speed, and wherein the matching module predicts a coordinate position of the target characteristic point of the historical image in the current image according to the historical state information, and selects a characteristic point nearest to the coordinate position as said matching characteristic point in the current image corresponding to the target characteristic point in the historical image and calculating, from the matching characteristic point, the current external information or the internal information of the image capturing unit;

a calculating module for calculating a relative proportional relationship between the external information of the image capturing unit and the external information of said at least one kind of sensor, or between the internal information of the image capturing unit and the internal information of said at least one kind of sensor, according to a predetermined positional relationship of said at least one kind of sensor relative to the image capturing unit, wherein external information comprises information about a distance to an external object and internal information comprises one or more of acceleration information, direction information, angular speed information, speed information or mileage information;

a modifying module for modifying current state information of the image capturing unit estimated from the historical state information, by using the relative proportional relationship.

8. The apparatus according to claim 7, wherein the modifying module comprises a filter unit and a modifying unit, wherein,

the filter unit filters the historical state information according to a pre-established state model and a pre-established measuring model by using a Kalman filter, to obtain the current state information of the image capturing unit;

the modifying unit subjects the relative proportional relationship and the current state information to a product operation.

9. The apparatus according to claim 7, wherein the predetermined positional relationship includes a distance between the at least one kind of sensor and the image capturing unit.

10. The apparatus according to claim 7, wherein the image capturing unit comprises a monocular camera.

11. The apparatus according to claim 10, wherein the monocular camera is a panoramic camera, and the image capturing unit further comprises a reflection mirror for reflecting external light rays to the monocular camera, the apparatus further comprises a calibrating module which, after the obtaining module obtains the current image shot by the image capturing unit, obtains a coordinate mapping relationship between arbitrary point in an external space and a corresponding point in the current image shot by the image capturing unit according to a pre-established calibration model corresponding to the reflection mirror, and calibrating the current image shot by the image capturing unit by using the coordinate mapping relationship.

12. The apparatus according to claim 7, wherein the state information comprises posture, position, speed, direction and surrounding environmental information of the image capturing unit.

**Patentansprüche**

1. Verfahren zum Modifizieren eines Luftfahrzeugstatus in Echtzeit, wobei das Luftfahrzeug eine Bilderfassungseinheit und mindestens eine Art von Sensor umfasst, wobei die Bilderfassungseinheit am Luftfahrzeug befestigt ist und wobei das Verfahren die folgenden Schritte umfasst:

Erhalten von historischen Statusinformationen der Bilderfassungseinheit, eines aktuellen Bildes, das von der Bilderfassungseinheit aufgenommen wurde, und eines historischen Bildes, das dem aktuellen Bild vorausgeht, und aktuell gemessenen externen Informationen oder internen Informationen, die von der mindestens einen Art von Sensor erfasst wurden;

Voraussagen eines übereinstimmenden charakteristischen Punktes im aktuellen Bild, der einem charakteristischen Zielpunkt im historischen Bild entspricht, gemäß den historischen Statusinformationen, wobei die historischen Statusinformationen Informationen umfassen, die einen Bewegungsvektor charakterisieren, der eine Richtung und eine Geschwindigkeit umfasst, und wobei der Schritt des Voraussagens eines übereinstimmenden charakteristischen Punktes im aktuellen Bild, der einem charakteristischen Zielpunkt im historischen Bild entspricht, gemäß den historischen Statusinformationen Folgendes umfasst:

Voraussagen einer Koordinatenposition des charakteristischen Zielpunktes des historischen Bildes im aktuellen Bild gemäß den historischen Statusinformationen und

Auswählen eines charakteristischen Punktes, der der Koordinatenposition am nächsten liegt, als den übereinstimmenden charakteristischen Punkt im aktuellen Bild, der dem charakteristischen Zielpunkt im historischen Bild entspricht; und

Berechnen der aktuellen externen Informationen oder der internen Informationen der Bilderfassungseinheit auf Basis des übereinstimmenden charakteristischen Punktes;

Berechnen einer relativen proportionalen Beziehung zwischen den externen Informationen der Bilderfassungseinheit und den externen Informationen der mindestens einen Art von Sensor oder zwischen den internen Informationen der Bilderfassungseinheit und den internen Informationen der mindestens einen Art von Sensor gemäß einer vorbestimmten Positionsbeziehung der mindestens einen Art von Sensor relativ zur Bilderfassungseinheit, wobei externe Informationen Informationen zu einem Abstand zu einem externen Objekt umfassen und interne Informationen eines oder mehreres von Beschleunigungsinformationen, Richtungsinformationen, Winkelgeschwindigkeitsinformationen, Geschwindigkeitsinformationen oder Flugleistungsinformationen umfassen; und

Modifizieren der aktuellen Statusinformationen der Bilderfassungseinheit, die anhand der historischen Statusinformationen geschätzt wurden, unter Verwendung der relativen proportionalen Beziehung.

2. Verfahren nach Anspruch 1, wobei der Schritt des Modifizierens der aktuellen Statusinformationen der Bilderfassungseinheit, die anhand der historischen Statusinformationen geschätzt wurden, unter Verwendung der relativen proportionalen Beziehung Folgendes umfasst:

Filtern der historischen Statusinformationen gemäß einem zuvor festgelegten Statusmodell und einem zuvor festgelegten Messmodell unter Verwendung eines Kalmanfilters, um die aktuellen Statusinformationen der Bilderfassungseinheit zu erhalten;

Unterziehen der relativen proportionalen Beziehung und der aktuellen Statusinformationen einer Produktoperation.

3. Verfahren nach Anspruch 1, wobei die vorbestimmte Positionsbeziehung einen Abstand zwischen der mindestens einen Art von Sensor und der Bilderfassungseinheit beinhaltet.

4. Verfahren nach Anspruch 1, wobei die Bilderfassungseinheit eine Monokularkamera umfasst.

5. Verfahren nach Anspruch 4, wobei die Monokularkamera eine Panoramakamera ist und die Bilderfassungseinheit ferner einen Reflexionsspiegel zum Reflektieren von externen Lichtstrahlen zur Monokularkamera umfasst; wobei das Verfahren nach dem Schritt des Erhaltens des aktuellen Bildes, das von der Bilderfassungseinheit aufgenommen wurde, Folgendes umfasst:

Erhalten einer Koordinatenzuordnungsbeziehung zwischen einem willkürlichen Punkt in einem externen Raum und einem entsprechenden Punkt im aktuellen Bild, das von der Bilderfassungseinheit aufgenommen wurde, gemäß einem zuvor festgelegten Kalibrierungsmodell, das dem Reflexionsspiegel entspricht; und Kalibrieren des aktuellen Bildes, das von der Bilderfassungseinheit aufgenommen wurde, unter Verwendung der Koordinatenzuordnungsbeziehung.

6. Verfahren nach Anspruch 1, wobei die Statusinformationen Lage-, Positions-, Geschwindigkeits-, Richtungs- und umliegende Umgebungsinformationen der Bilderfassungseinheit umfassen.

7. Vorrichtung zum Modifizieren eines Luftfahrzeugstatus in Echtzeit, wobei das Luftfahrzeug eine Bilderfassungseinheit, die am Luftfahrzeug befestigt ist, und mindestens eine Art von Sensor umfasst, wobei die Vorrichtung Folgendes umfasst:

ein Erhaltungsmodul zum Erhalten von historischen Statusinformationen einer Bilderfassungseinheit, eines aktuellen Bildes, das von der Bilderfassungseinheit aufgenommen wurde, und eines historischen Bildes, das dem aktuellen Bild vorausgeht, und aktuell gemessenen externen Informationen oder internen Informationen, die von der mindestens einen Art von Sensor erfasst wurden;

ein Abgleichungsmodul zum Voraussagen eines übereinstimmenden charakteristischen Punktes im aktuellen Bild, der einem charakteristischen Zielpunkt im historischen Bild entspricht, gemäß den historischen Statusinformationen,

wobei die historischen Statusinformationen Informationen umfassen, die einen Bewegungsvektor charakterisieren, der eine Richtung und eine Geschwindigkeit umfasst, und wobei das Abgleichungsmodul eine Koordinatenposition des charakteristischen Zielpunktes des historischen Bildes im aktuellen Bild gemäß den historischen Statusinformationen voraussagt und einen charakteristischen Punkt, der der Koordinatenposition am nächsten ist, als den übereinstimmenden charakteristischen Punkt im aktuellen Bild, der dem charakteristischen Zielpunkt im historischen Bild entspricht, auswählt, und Berechnen der aktuellen externen Informationen oder der internen Informationen der Bilderfassungseinheit anhand des übereinstimmenden charakteristischen Punktes;

ein Berechnungsmodul zum Berechnen einer relativen proportionalen Beziehung zwischen den externen Informationen der Bilderfassungseinheit und den externen Informationen der mindestens einen Art von Sensor oder zwischen den internen Informationen der Bilderfassungseinheit und den internen Informationen der mindestens einen Art von Sensor gemäß einer vorbestimmten Positionsbeziehung der mindestens einen Art von Sensor relativ zur Bilderfassungseinheit, wobei externe Informationen Informationen zu einem Abstand zu einem externen Objekt umfassen und interne Informationen eines oder mehreres von Beschleunigungsinformationen, Richtungsinformationen, Winkelgeschwindigkeitsinformationen, Geschwindigkeitsinformationen oder Flugleistungsinformationen umfassen;

ein Modifikationsmodul zum Modifizieren der aktuellen Statusinformationen der Bilderfassungseinheit, die anhand der historischen Statusinformationen geschätzt wurden, unter Verwendung der relativen proportionalen Beziehung.

8. Vorrichtung nach Anspruch 7, wobei das Modifikationsmodul eine Filtereinheit und eine Modifikationseinheit umfasst, wobei

die Filtereinheit die historischen Statusinformationen gemäß einem zuvor festgelegten Statusmodell und einem zuvor festgelegten Messmodell unter Verwendung eines Kalmanfilters filtert, um die aktuellen Statusinformationen der Bilderfassungseinheit zu erhalten;

die Modifikationseinheit die relative proportionale Beziehung und die aktuellen Statusinformationen einer Produktoperation unterzieht.

9. Vorrichtung nach Anspruch 7, wobei die vorbestimmte Positionsbeziehung einen Abstand zwischen der mindestens einen Art von Sensor und der Bilderfassungseinheit beinhaltet.

10. Vorrichtung nach Anspruch 7, wobei die Bilderfassungseinheit eine Monokularkamera umfasst.

11. Vorrichtung nach Anspruch 10, wobei die Monokularkamera eine Panoramakamera ist und die Bilderfassungseinheit ferner einen Reflexionsspiegel zum Reflektieren von externen Lichtstrahlen zur Monokularkamera umfasst, wobei die Vorrichtung ferner ein Kalibrierungsmodul umfasst, das, nachdem das Erhaltungsmodul das aktuelle Bild, das von der Bilderfassungseinheit aufgenommen wurde, erhalten hat, eine Koordinatenzuordnungsbeziehung zwischen einem willkürlichen Punkt in einem externen Raum und einem entsprechenden Punkt im aktuellen Bild, das von der Bilderfassungseinheit aufgenommen wurde, gemäß einem zuvor festgelegten Kalibrierungsmodell, das dem Reflexionsspiegel entspricht, erhält; und Kalibrieren des aktuellen Bildes, das von der Bilderfassungseinheit aufgenommen wurde, unter Verwendung der Koordinatenzuordnungsbeziehung.

12. Vorrichtung nach Anspruch 7, wobei die Statusinformationen Lage-, Positions-, Geschwindigkeits-, Richtungs- und umliegende Umgebungsinformationen der Bilderfassungseinheit umfassen.

## Revendications

1. Procédé pour modifier un état d'avion en temps réel, dans lequel l'avion comprend une unité de capture d'image et au moins un type de capteur, dans lequel l'unité de capture d'image est fixée sur l'avion, et dans lequel le procédé comprend les étapes suivantes :

d'obtention d'informations d'état d'historique de l'unité de capture d'image, d'une image actuelle prise par l'unité de capture d'image et d'une image d'historique précédant l'image actuelle, et d'informations externes actuellement mesurées ou d'informations internes détectées par ledit au moins un type de capteur ;
de prédiction d'un point caractéristique de correspondance dans l'image actuelle correspondant à un point caractéristique cible dans l'image d'historique conformément aux informations d'état d'historique, dans lequel les informations d'état d'historique comprennent des informations caractérisant un vecteur de mouvement comprenant une direction et une vitesse, et dans lequel l'étape de prédiction d'un point caractéristique de correspondance dans l'image actuelle correspondant à un point caractéristique cible dans l'image d'historique conformément aux informations d'état d'historique comprend :

la prédiction d'une position de coordonnées du point caractéristique cible de l'image d'historique dans l'image actuelle conformément aux informations d'état d'historique, et

la sélection d'un point caractéristique le plus proche de la position de coordonnées en tant que dit point caractéristique de correspondance dans l'image actuelle correspondant au point caractéristique cible dans l'image d'historique ; et

le calcul, sur la base du point caractéristique de correspondance, des informations externes actuelles ou des informations internes de l'unité de capture d'image ;

le calcul d'une relation proportionnelle relative entre les informations externes de l'unité de capture d'image et les informations externes dudit au moins un type de capteur, ou entre les informations internes de l'unité de capture d'image et les informations internes dudit au moins un type de capteur, conformément à une relation de position prédéterminée dudit au moins un type de capteur par rapport à l'unité de capture d'image, dans lequel les informations externes comprennent des informations concernant une distance jusqu'à un objet externe et les informations internes comprennent une ou plusieurs d'informations d'accélération, d'informations de direction, d'informations de vitesse angulaire, d'informations de vitesse ou d'informations de kilométrage ; et

la modification des informations d'état actuel de l'unité de capture d'image estimées à partir des informations d'état d'historique, en utilisant la relation proportionnelle relative.

2. Procédé selon la revendication 1, dans lequel l'étape de modification des informations d'état actuel de l'unité de capture d'image estimées à partir des informations d'état d'historique, en utilisant la relation proportionnelle relative comprend :

le filtrage des informations d'état d'historique conformément à un modèle d'état établi au préalable et à un modèle de mesure établi au préalable en utilisant un filtre de Kalman, pour obtenir les informations d'état actuel de l'unité de capture d'image ;

l'application, à la relation proportionnelle relative et aux informations d'état actuel, d'une opération de produit.

3. Procédé selon la revendication 1, dans lequel la relation de position prédéterminée comprend une distance entre ledit au moins un type de capteur et l'unité de capture d'image.

4. Procédé selon la revendication 1, dans lequel l'unité de capture d'image comprend une caméra monoculaire.

5. Procédé selon la revendication 4, dans lequel la caméra monoculaire est une caméra panoramique, et l'unité de capture d'image comprend en outre un miroir de réflexion pour réfléchir les rayons de lumière externes vers la caméra monoculaire ; le procédé comprend en outre, après l'étape d'obtention de l'image actuelle prise par l'unité de capture d'image :

l'obtention d'une relation de mappage de coordonnées entre un point arbitraire dans un espace externe et un point correspondant dans l'image actuelle prise par l'unité de capture d'image, conformément à un modèle d'étalonnage établi au préalable correspondant au miroir de réflexion ; et l'étalonnage de l'image actuelle prise par l'unité de capture d'image en utilisant la relation de mappage de coordonnées.

6. Procédé selon la revendication 1, dans lequel les informations d'état comprennent une posture, une position, une vitesse, une direction et des informations environnementales alentour de l'unité de capture d'image.

7. Appareil pour modifier un état d'avion en temps réel, dans lequel l'avion comprend une unité de capture d'image fixée sur l'avion et au moins un type de capteur, l'appareil comprenant :

un module d'obtention pour obtenir des informations d'état d'historique d'une unité de capture d'image, une image actuelle prise par l'unité de capture d'image et une image d'historique précédant l'image actuelle, et des informations externes mesurées actuellement ou des informations internes détectées par ledit au moins un type de capteur ;

un module de mise en correspondance pour prédire un point caractéristique de correspondance dans l'image actuelle correspondant à un point caractéristique cible dans l'image d'historique conformément aux informations d'état d'historique, dans lequel les informations d'état d'historique comprennent des informations caractérisant un vecteur de mouvement comprenant une direction et une vitesse, et dans lequel le module de mise en correspondance prédit une position de coordonnées du point caractéristique cible de l'image d'historique dans l'image actuelle conformément aux informations d'état d'historique, et sélectionne un point caractéristique le plus proche de la position de coordonnées en tant que dit point caractéristique de correspondance dans l'image actuelle correspondant au point caractéristique cible dans l'image d'historique, et calculer, à partir du point caractéristique de correspondance, les informations externes actuelles ou les informations internes de l'unité de capture d'image ;

un module de calcul pour calculer une relation proportionnelle relative entre les informations externes de l'unité de capture d'image et les informations externes dudit au moins un type de capteur, ou entre les informations internes de l'unité de capture d'image et les informations internes dudit au moins un type de capteur, conformément à une relation de position prédéterminée dudit au moins un type de capteur par rapport à l'unité de capture d'image, dans lequel les informations externes comprennent des informations concernant une distance jusqu'à un objet externe et les informations internes comprennent une ou plusieurs d'informations d'accélération, d'informations de direction, d'informations de vitesse angulaire, d'informations de vitesse ou d'informations de kilométrage ;

un module de modification pour modifier les informations d'état actuel de l'unité de capture d'image estimées à partir des informations d'état d'historique, en utilisant la relation proportionnelle relative.

8. Appareil selon la revendication 7, dans lequel le module de modification comprend une unité de filtre et une unité de modification, dans lequel

l'unité de filtre filtre les informations d'état d'historique conformément à un modèle d'état établi au préalable et à un modèle de mesure établi au préalable en utilisant un filtre de Kalman, pour obtenir les informations d'état actuel de l'unité de capture d'image ;

l'unité de modification applique, à la relation proportionnelle relative et aux informations d'état actuel, une opération de produit.

9. Appareil selon la revendication 7, dans lequel la relation de position prédéterminée comprend une distance entre ledit au moins un type de capteur et l'unité de capture d'image.

10. Appareil selon la revendication 7, dans lequel l'unité de capture d'image comprend une caméra monoculaire.

11. Appareil selon la revendication 10, dans lequel la caméra monoculaire est une caméra panoramique, et l'unité de capture d'image comprend en outre un miroir de réflexion pour réfléchir les rayons de lumière externes vers la caméra monoculaire, l'appareil comprenant en outre un module d'étalonnage qui, après que le module d'obtention a obtenu l'image actuelle prise par l'unité de capture d'image, obtient une relation de mappage de coordonnées entre un point arbitraire dans un espace externe et un point correspondant dans l'image actuelle prise par l'unité de capture d'image conformément à un modèle d'étalonnage établi au préalable correspondant au miroir de réflexion, et étalonne l'image actuelle prise par l'unité de capture d'image en utilisant la relation de mappage de coordonnées.

12. Appareil selon la revendication 7, dans lequel les informations d'état comprennent une posture, une position, une vitesse, une direction et des informations environnementales alentour de l'unité de capture d'image.

Obtaining historical state information of a camera unit, a current image shot by the camera unit and a historical image preceding the current image, and external information or internal information currently sensed by at least one kind of sensor.  — S101

Predicting a matching characteristic point in the current image corresponding to a target characteristic point in the historical image according to the historical state information, and calculating, from the matching characteristic point, current external information or internal information of the camera unit.  — S102

According to a predetermined positional relationship of the at least one kind of sensor relative to the camera unit, calculating a relative proportional relationship between the external information of the camera unit and the external information of the at least one kind of sensor, or between the internal information of the camera unit and the internal information of the at least one kind of sensor.  — S103

Using the relative proportional relationship to modify current state information of the camera unit estimated from the historical state information.  — S104

Figure 1

Before Calibration

After Calibration

Figure 2

Performing initialization to obtain a pre-determined positional relationship between the camera unit and the at least one kind of sensor, the pre-established state model and measuring model, the pre-established calibration model corresponding to the reflection mirror, and initial state information of the camera.  — S201

Predicting the predicted value of the current state information of the system according to the previous state information and the state model.  — S202

Obtaining the current image shot by the camera unit and the previous image prior to the current image and the characteristic point measured by a laser sensor under a world coordinate system.  — S203

Obtaining a coordinate mapping relationship between any point in an external space and a corresponding point in the current image according to the calibration model, and using the coordinate mapping relationship to calibrate the current image.  — S204

Predicting a matching characteristic point in the calibrated current image corresponding to a target characteristic point in the previous image according to the previous state information, and obtaining a measured value of the matching characteristic point according to the preset measuring model and the matching characteristic point.  — S205

Using a Kalman filter to filter the predicted value of the current state information and the measured value of the matching characteristic point to obtain an estimated value of the current state information of the camera unit.  — S206

Calculating a first distance from the laser sensor to the characteristic point under the world coordinate system and a second distance from the camera unit to the measured value of the matching characteristic point, and calculating a relative proportional relationship between the first distance and the second distance according to the positional relationship.  — S207

Subjecting the relative proportional relationship and the estimated value of the current state information to product operation.  — S208

Figure 3

Figure 4

**EP 3 081 902 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005119178 A1